(19) Europäisches Patentamt
European Patent Office
Office européen des brevets

(11) **EP 3 240 905 B1**

(12) **FASCICULE DE BREVET EUROPEEN**

(45) Date de publication et mention
de la délivrance du brevet:
**03.04.2019 Bulletin 2019/14**

(21) Numéro de dépôt: **15830828.8**

(22) Date de dépôt: **30.12.2015**

(51) Int Cl.:
*C12P 19/26* (2006.01)     *C08B 37/08* (2006.01)
*C12P 21/06* (2006.01)

(86) Numéro de dépôt international:
**PCT/FR2015/053785**

(87) Numéro de publication internationale:
**WO 2016/108037 (07.07.2016 Gazette 2016/27)**

(54) **POUDRE DE COLÉOPTÈRES**

KÄFERPULVER

BEETLE POWDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **31.12.2014 FR 1463512**
**20.10.2015 FR 1560012**

(43) Date de publication de la demande:
**08.11.2017 Bulletin 2017/45**

(73) Titulaire: **Ynsect**
**91058 Evry Cedex (FR)**

(72) Inventeurs:
• **ARMENJON, Benjamin**
**75013 Paris (FR)**
• **BEREZINA, Nathalie**
**75005 Paris (FR)**
• **LAURENT, Sophie**
**44200 Nantes (FR)**
• **SOCOLSKY, Cécilia**
**59800 Lille (FR)**
• **SANCHEZ, Lorena**
**91260 Juvisy-sur-Orge (FR)**
• **HUBERT, Antoine**
**94140 Alfortville (FR)**

(74) Mandataire: **Santarelli**
**49, avenue des Champs-Elysées**
**75008 Paris (FR)**

(56) Documents cités:
**CN-A- 1 297 691     CN-A- 101 116 471**
**CN-A- 101 292 737     CN-B- 101 144 097**

• **Hervé Guénot: "Des insectes dans la farine", JDD Paris , 19 décembre 2012 (2012-12-19), page 2pp, XP002757230, Extrait de l'Internet: URL:http://www.lejdd.fr/JDD-Paris/Actualit e/Des-insectes-dans-la-farine-581928 [extrait le 2016-05-02]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à une poudre d'insectes. Elle vise également un procédé de préparation de cette poudre et son utilisation dans l'alimentation humaine ou animale, et plus particulière dans l'alimentation des poissons.

L'aquaculture est aujourd'hui l'un des secteurs les plus dynamiques de l'industrie alimentaire. La forte demande en poissons a eu pour conséquence d'augmenter significativement le prix des aliments destinés à l'élevage des poissons.

L'un des produits les plus utilisé dans l'alimentation des poissons est la farine de poisson. La farine de poisson est une des principales sources de protéines dans les aliments aquacoles. C'est une farine est très riches en protéines animales (riche en acides aminés type lysine et méthionine) faciles à digérer. Une demande croissante accompagnée d'une offre limitée a eu pour conséquence d'en augmenter significativement son prix, engendrant un risque pour la croissance durable de l'aquaculture. Ainsi, il y a une forte demande pour des sources alternatives de protéines de qualité élevée et, dans la mesure du possible, renouvelables pour les aliments aquacoles.

Les farines d'insectes proposent des sources protéiques naturelles de remplacement et la possibilité d'être produit en masse avec une empreinte écologique minimale. En particulier, certains coléoptères tels que *Tenebrio molitor*, présentent l'intérêt de pouvoir être adaptés à une production en masse intensive.

Toutefois, les résultats d'essais de substitution de la farine de poisson par diverses farines d'insectes s'avèrent mitigés. Dans le cas où la substitution s'avère possible, celle-ci n'excède généralement pas les 50%, au-delà de cette teneur des effets néfastes sur la croissance des poissons étant observés.

Document XP002757230; "Des insectes dans la farine", JDD Paris, 19-12-2012, page 1, concerne l'utilisation possible de farines d'insectes telles que des farines issues de Tenebrio molitor, qui est un coléoptère, dans l'industrie alimentaire.

Le travail des inventeurs a permis de mettre en évidence qu'une poudre d'insectes spécifique pouvait être avantageusement utilisée en remplacement d'une farine de poisson dans l'alimentation aquacole.

La présente invention concerne donc une poudre de coléoptères comportant au moins 67% en poids de protéines et au moins 5% en poids de chitine, les pourcentages en poids étant donnés sur le poids total de poudre de coléoptères.

On notera que dans le cadre de la présente demande, et sauf stipulation contraire, les gammes de valeurs indiquées s'entendent bornes incluses.

Par « poudre de coléoptères », on entend une composition, sous forme de particules, préparée uniquement à partir de coléoptères et éventuellement d'eau.

Le taux d'humidité résiduel de la poudre de coléoptère est compris entre 2 et 15%, de préférence entre 5 et 10%, plus préférentiellement, entre 4 et 8%. Ce taux d'humidité peut par exemple être déterminé selon la méthode issue du règlement CE 152/2009 du 27-01 -2009 (103 °C / 4 h).

Dans toute la demande, lorsqu'aucune date n'est précisée pour un règlement, une norme ou une directive, il s'agit du règlement, de la norme ou de la directive en vigueur à la date de dépôt.

Lorsque la poudre de coléoptère est broyée à une taille de particules acceptable pour l'alimentation humaine ou animale, celle-ci peut être désignée sous l'appellation « farine de coléoptère » (« coleoptera meal », en anglais). Par « taille de particules acceptable pour l'alimentation humaine ou animale », on vise une taille de particules comprise entre 100 $\mu$m et 1,5 mm, préférentiellement comprise entre 300 $\mu$m et 1 mm, plus préférentiellement entre 500 et 800 $\mu$m.

Préférentiellement, les coléoptères préférés selon l'invention appartiennent aux familles des Tenebrionidae, Melolonthidae, Dermestidae, Coccinellidae, Cerambycidae, Carabidae, Buprestidae, Cetoniidae, Dryophthoridae, ou leurs mélanges.

Plus préférentiellement, il s'agit des coléoptères suivants : *Tenebrio molitor*, *Alphitobius diaperinus, Zophobas morio, Tenebrio obscurus, Tribolium castaneum et Rhynchophorus ferrugineus,* ou leurs mélanges.

Par « protéines », on vise la quantité de protéines brutes. La quantification des protéines brutes est bien connue de l'homme du métier. A titre d'exemple, on peut citer la méthode Dumas ou la méthode Kjeldhal. De préférence, la méthode Dumas, correspondant à la norme NF EN ISO 16634-1 (2008) est utilisée.

Préférentiellement, la poudre de coléoptères comporte 68% en poids de protéines brutes, plus préférentiellement 70% en poids de protéines brutes, les pourcentages en poids étant donnés sur le poids total de poudre de coléoptères.

Selon l'invention, par « chitine », on entend tout type de dérivé chitinique, c'est-à-dire de dérivé de polysaccharides comportant des unités N-acétyl-glucosamine et des unités D-glucosamines, en particulier les copolymères chitine-polypeptides (parfois désignés sous l'appellation « composite chitine-polypeptides »). Ces copolymères peuvent également être associés à des pigments, souvent de type mélanine.

La chitine serait le deuxième polymère le plus synthétisé dans le monde vivant après la cellulose. En effet, la chitine est synthétisée par de nombreuses espèces du monde vivant: elle constitue en partie l'exosquelette des crustacés et des insectes et la paroi latérale qui entoure et protège les champignons. Plus particulièrement, chez les insectes, la chitine constitue ainsi 3 à 60% de leur exosquelette.

La détermination du taux de chitine est effectuée par extraction de celle-ci. Une telle méthode peut être la méthode ADAC 991.43 décrite à l'Exemple 2, et est une méthode préférée pour cette détermination.

Préférentiellement, la poudre comporte entre 5 et 16% en poids de chitine, plus préférentiellement entre 8 et 14% de chitine, les pourcentages en poids étant donnés sur le poids total de poudre de coléoptères.

La poudre de coléoptères selon l'invention comporte un fort taux de protéines brutes. Un tel taux n'est usuellement obtenu que par un procédé de traitement des coléoptères comportant une étape d'hydrolyse. Or, une étape d'hydrolyse a pour effet d'abaisser le taux de chitine à une teneur de l'ordre de 5% en poids, telle qu'inférieure à 5% en poids, sur le poids total de la composition.

Or, la chitine est souvent considérée comme une sorte de facteur anti-nutritionnel car difficile à digérer. Ceci explique que pour des applications dans le domaine agro-alimentaires, des compositions à base d'insectes sont déchitinées, c'est-à-dire qu'une étape de retrait de la chitine est effectuée. Or, le travail des inventeurs a également permis de démontrer que, contrairement aux idées reçues, la chitine n'avait pas d'impact sur la croissance de poissons nourris avec une poudre de coléoptères selon l'invention, comportant un taux non négligeable de chitine (voir Exemple 4 ci-après). Au contraire, la poudre de coléoptères selon l'invention peut avantageusement remplacer non seulement partiellement mais également dans sa totalité, une farine de poissons dans un aliment aquacole. En effet, la poudre de coléoptères selon l'invention permet d'améliorer la croissance d'animaux nourris avec cette poudre.

En outre, lors du processus de fabrication des aliments, l'introduction de la poudre de coléoptères selon l'invention présente également certains avantages : réduction en pertes en vitamines hydrosolubles lors d'éventuels traitement thermiques et réduction de l'énergie nécessaire lors d'une éventuelle étape d'extrusion.

Avantageusement, la poudre de coléoptères selon l'invention présente une teneur en cendres inférieure ou égale à 4% en poids sur le poids total de poudre de coléoptères, et encore plus avantageusement inférieure ou égale à 3,5%.

Les cendres constituent le résidu résultant de la combustion de la composition selon l'invention.

La méthode de détermination de la teneur en cendres est bien connue de l'homme du métier. De préférence, les cendres ont été déterminées selon la méthode relevant du règlement CE 152/2009 du 27-01-2009.

La teneur en matière grasse de la poudre de coléoptères selon l'invention est de préférence comprise entre 5 et 20% en poids sur le poids total de poudre de coléoptères, plus préférentiellement entre 9 et 17%.

Les méthodes de détermination de la teneur en matière grasse sont bien connues de l'homme du métier. A titre d'exemple et de manière préférée, la détermination de cette teneur sera effectuée en suivant la méthode du règlement CE 152/2009.

Avantageusement, les protéines de la poudre de coléoptères selon invention présentent une digestibilité supérieure ou égale à 85% en poids sur le poids total de protéines brutes.

La digestibilité est une digestibilité pepsique mesurée par la méthode décrite dans la directive 72/199/CE.

De préférence, la digestibilité est supérieure ou égale à 86%, plus préférentiellement, supérieure ou égale à 88%.

Avantageusement, la poudre de coléoptères selon l'invention comporte entre 35 et 65% en poids de protéines solubles par rapport au poids total de protéines, et au moins 50% des protéines solubles ont une taille inférieure ou égale à 12400g/mol.

Par « poids total de protéines », on entend le poids de protéines brutes présentes dans la poudre de coléoptères selon l'invention.

Par « protéines solubles », on entend, parmi les protéines brutes, celles qui sont solubles dans une solution aqueuse dont le pH est compris entre 6 et 8, avantageusement entre 7,2 et 7,6.

De préférence, la solution aqueuse est une solution tampon dont le pH est compris entre 6 et 8, avantageusement entre 7,2 et 7,6. Préférentiellement, la solution tampon est une solution tampon phosphate NaCl, dont le pH est égal 7,4 +/- 0,2.

La digestibilité des protéines chez l'homme et les animaux est fortement conditionnée par la taille des protéines. En nutrition animale, il est courant de réduire la taille des protéines, afin de faciliter la digestion des animaux. Cette réduction de la taille des protéines se fait généralement par des procédés d'hydrolyse (par exemple enzymatique), dont la mise en oeuvre est particulièrement coûteuse.

La poudre de coléoptères selon l'invention, obtenue par un procédé ne faisant pas intervenir d'hydrolyse, comporte une quantité importante de protéines solubles dont la taille est suffisamment réduite pour faciliter la digestion des animaux. La poudre de coléoptères selon l'invention présente en outre l'avantage de pouvoir être préparée à moindre coût.

Avantageusement, la poudre de coléoptères selon l'invention comporte entre 38 et 60% en poids, de préférence entre 43 et 55% en poids de protéines solubles par rapport au poids total de protéines.

De préférence, au moins 60%, préférentiellement au moins 70% des protéines solubles ont une taille inférieure ou égale à 12400g/mol.

Plus particulièrement, les protéines solubles ont une taille comprise entre 6500 et 12400g/mol.

Avantageusement, moins de 10%, de préférence moins de 8%, plus préférentiellement moins de 6% de protéines solubles ont une taille supérieure ou égale à 29000g/mol.

A titre d'exemple, une analyse par chromatographie d'exclusion stérique de la taille des protéines solubles d'une poudre de coléoptères selon l'invention est présentée à l'Exemple 6.

L'invention divulgue également un procédé de préparation d'une poudre coléoptères selon l'invention.

Le procédé de préparation de la poudre de coléoptères selon l'invention comporte une étape de pressage des coléoptères.

L'objectif du pressage est de déshuiler les coléoptères et donc d'obtenir un gâteau de presse ayant une teneur en huile (ou matière grasse) inférieure ou égale à 20% en poids sur le poids sec de gâteau de presse, préférentiellement, inférieure ou égale à 17%.

L'étape de pressage est plus amplement décrite dans l'étape 2 du procédé de préparation détaillé ci-après.

En particulier, il est possible d'effectuer un pressage à chaud ou à froid. De préférence, une presse mono-vis est utilisée.

Plus particulièrement, le procédé de préparation selon l'invention comporte les étapes suivantes :

i) abattage des coléoptères,
ii) pressage des coléoptères pour obtenir un gâteau de presse, et
iii) broyage du gâteau de presse.

L'abattage des coléoptères peut être effectué par ébouillantage ou blanchiment, comme cela est plus amplement décrit ci-après dans l'étape 1 du procédé détaillé.

De même, le broyage est plus amplement décrit dans l'étape 4 du procédé détaillé.

Enfin, le procédé de préparation selon l'invention peut comporter en outre une étape de séchage du gâteau de presse.

L'étape de séchage est avantageusement réalisée après l'étape de pressage et avant l'étape de broyage.

Le séchage est plus amplement décrit dans l'étape 3 du procédé détaillé.

**Procédé détaillé de préparation de la poudre de coléptère selon l'invention**

**• Etape 1 : abattage des insectes**

Cette étape 1 d'abattage peut avantageusement s'effectuer par ébouillantage ou par blanchiment. Cette étape 1 permet d'abattre les insectes tout en abaissant la charge microbienne (réduction du risque d'altération et sanitaire) et en inactivant les enzymes internes des insectes pouvant déclencher une autolyse, et ainsi un brunissement rapide de ceux-ci.

Pour l'ébouillantage, les insectes, de préférence des larves, sont ainsi ébouillantés à l'eau pendant 2 à 20 min, préférentiellement, 5 à 15 min. De préférence, l'eau est à une température comprise entre 95 à 100°C, préférentiellement 100°C.

La quantité d'eau introduite lors de l'ébouillantage est déterminée de la façon suivante : le ratio du volume d'eau en mL sur le poids en g d'insecte est de préférence compris entre 0,3 et 10, plus préférentiellement entre 0,5 et 5, encore plus préférentiellement entre 0,7 et 3, encore plus préférentiellement de l'ordre de 1.

Pour le blanchiment, les insectes, de préférence des larves, sont blanchis à la vapeur (buses ou lit de vapeur) à une température comprise entre 80 et 130°C, de préférence entre 90 et 120°C, plus préférentiellement entre 95 et 105°C, encore plus préférentiellement 98°C ou bien à l'eau à une température comprise entre 95 et 100°C, préférentiellement 100°C (par buses d'aspersion) ou en mode mixte (eau + vapeur) à une température comprise entre 80 et 130°C, de préférence entre 90 et 120°C, plus préférentiellement entre 95 et 105°C, encore plus préférentiellement 98°C. Le temps de séjour dans la chambre de blanchiment est compris entre 1 à 15 minutes, préférentiellement entre 3 et 7 min.

**• Etape (optionnelle) : broyage**

Les insectes sont retirés de la cuve d'ébouillantage ou de la chambre de blanchiment, ils sont ensuite tamisés (ou égouttés), et placés dans un broyeur, tel qu'un broyeur mixeur à couteaux, permettant de réduire les insectes en particules.

Afin de faciliter le broyage, une quantité d'eau peut être ajoutée. Cette quantité d'eau est similaire à celle introduite lors de l'étape 1 d'ébouillantage : le ratio du volume d'eau en mL sur le poids en g d'insecte est de préférence compris entre 0,3 et 10, plus préférentiellement entre 0,5 et 5, encore plus préférentiellement entre 0,7 et 3, encore plus préférentiellement de l'ordre de 1. Il est également possible de garder l'eau d'ébouillantage et/ou l'eau résultant du blanchiment pour effectuer cette étape.

De préférence, à l'issue du broyage, la taille des particules d'insectes est inférieure à 1 cm (plus grande taille de particule observable à l'aide d'un microscope), de préférence inférieure à 0,5 cm. Préférentiellement, la taille des particules est comprise entre 300 $\mu$m et 3 mm, plus préférentiellement entre 500 $\mu$m et 1 mm. Il n'est pas nécessaire de réduire excessivement la taille des particules, par exemple à une taille inférieure à 250 $\mu$m.

**• Etape 2 : pressage**

Les insectes issus de l'étape 1 d'abattage ou la pâte humide issue de l'étape optionnelle de broyage est ensuite placée dans une presse selon un mode opératoire qui permet de presser et séparer un jus comportant à la fois une fraction huileuse et une fraction protéique.

De préférence, l'étape de pressage permet d'obtenir un gâteau de presse comportant une teneur en huile inférieure ou égale à 20% en poids sur le poids sec du gâteau de presse, préférentiellement, inférieure ou égale à 17%, plus préférentiellement inférieure ou égale à 15%.

De même, l'étape de pressage permet d'obtenir un gâteau de presse présentant une teneur en matière sèche comprise entre 30% et 60%, préférentiellement, comprise entre 40% et 55%, et plus préférentiellement comprise entre 45% et 55%.

Tout système de presse peut être utilisé pour réaliser l'étape de pressage, tel que par exemple, une presse mono-vis ou bi-vis (presse bi-vis de type Angel), un filtre-presse (filtre-presse de type Choquenet), une presse à plateaux, etc. Ces systèmes sont bien connus de l'homme du métier qui est à même de déterminer les conditions de pressage afin d'obtenir les teneurs en huile et/ou en eau mentionnées ci-avant.

En particulier, il est possible d'effectuer un pressage à chaud ou à froid. Avantageusement, le pressage sera effectué à chaud, ce qui permet d'augmenter le déshuilage du gâteau de presse. En particulier, un pressage à chaud permet l'obtention d'un gâteau de presse comportant une teneur en huile inférieure ou égale à 17% en poids sur le poids sec de gâteau de presse, de préférence inférieure ou égale à 15%.

**• Etape 3 : séchage**

Le gâteau de presse est ensuite séché par les technologies classiques connues par l'homme de métier. Le séchage peut être direct ou indirect (sécheur en couche mince, « paddle dryer », « tubular dryer », « disc-dryer », etc.) à une température comprise entre 60°C et 260°C, pendant une durée de 15 min à 24 heures. A titre d'exemple, le gâteau de presse peut être disposé et séché à l'air ventilé/brassé à une température comprise entre 80 et 100°C, préférentiellement à 90°C pendant une durée comprise entre 3 et 7 heures, préférentiellement 5 heures.

L'objectif de cette étape de séchage est l'obtention d'un gâteau de presse ayant un taux d'humidité compris entre 2 et 15%, de préférence entre 5 et 10%, plus préférentiellement encore entre 4 et 8%.

**• Etape 4 : broyage final**

Le gâteau de presse séché est ensuite placé dans un broyeur, tel qu'un broyeur à marteaux, permettant de réduire le gâteau de presse en particules.

Avantageusement, à l'issue de ce broyage final, la taille des particules d'insectes est inférieure à 0,5 cm (plus grande taille de particule observable à l'aide d'un microscope), de préférence de l'ordre de 1 mm. Plus particulièrement, la taille de particules est comprise entre 300 $\mu$m et 1 mm, encore plus préférentiellement entre 500 et 800 $\mu$m.

La succession de ces quatre étapes permet d'obtenir une poudre de coléoptères selon l'invention, comportant un fort taux de protéines brutes tout en maintenant un taux de chitine de l'ordre d'au moins 5% en poids sur le poids total de la composition.

Comme indiqué ci-avant, l'étape de pressage peut être réalisée à froid ou à chaud.

A titre d'exemple de procédé d'obtention de la poudre de coléoptères selon l'invention, impliquant un pressage à froid :

Des larves, par exemple de *T. molitor*, sont introduites dans un bêcher contenant 200 mL d'eau préalablement portée à ébullition, et abattues par ébouillantage au bain-marie à 100 °C. Après 5 minutes, le bêcher est retiré du bain-marie, les larves sont essorées, puis mixées avec un volume d'eau de 200 mL. Le liquide ainsi obtenu est passé dans une presse de type bi-vis. Le gâteau de presse ainsi obtenu est séché 24 heures dans une étuve à 70 °C, puis broyé à 250 $\mu$m.

A titre d'exemple de procédé d'obtention de la poudre de coléoptères selon l'invention, impliquant un pressage à chaud :

Des larves, par exemple de *T. molitor*, sont introduites dans une chambre de blanchiment et blanchies à la vapeur pendant 5 min à 100°C. Les larves ainsi blanchies sont ensuite introduites dans une presse de type "assèchement" adaptée aux produits chargés en eau. Le gâteau de presse ainsi obtenu est séché 5 heures dans une étuve à 90 °C, puis broyé dans un broyeur à marteaux à 1 mm.

De préférence, le procédé de préparation d'une poudre de coléoptères selon l'invention comporte les étapes suivantes :

i) abattage des coléoptères,
ii) pressage des coléoptères pour obtenir un gâteau de presse,
iii) séchage du gâteau de presse, et
iv) broyage du gâteau de presse.

Selon un premier mode de réalisation du procédé selon l'invention, l'étape de pressage est précédée d'une étape de broyage des coléoptères.

L'invention concerne donc un procédé de préparation d'une poudre de coléoptères selon l'invention comportant les étapes suivantes :

i) abattage des coléoptères,
ii) pressage des coléoptères pour obtenir un gâteau de presse,
iii) séchage du gâteau de presse, et
iv) broyage du gâteau de presse,

dans lequel l'étape de pressage est précédée d'une étape de broyage des coléoptères.

Un avantage de l'étape de broyage des coléoptères préalable au pressage est plus amplement décrit dans l'Exemple 5.

Selon un second mode de réalisation du procédé selon l'invention, l'étape de pressage des coléoptères est réalisée à chaud.

L'invention concerne donc un procédé de préparation d'une poudre de coléoptères selon l'invention comportant les étapes suivantes :

i) abattage des coléoptères,
ii) pressage des coléoptères pour obtenir un gâteau de presse,
iii) séchage du gâteau de presse, et
iv) broyage du gâteau de presse,

dans lequel l'étape de pressage est réalisée à chaud.

Comme indiqué ci-avant, le pressage à chaud permet l'obtention d'un gâteau de presse comportant une teneur en huile inférieure ou égale à 17% en poids sur le poids sec de gâteau de presse, de préférence inférieure ou égale à 15%.

Selon un troisième mode de réalisation du procédé selon l'invention, l'étape de broyage du gâteau de presse est réalisée à une taille de particules comprise entre 300 $\mu$m et 1 mm, de préférence entre 500 et 800 $\mu$m.

L'invention concerne donc un procédé de préparation d'une poudre de coléoptères selon l'invention comportant les étapes suivantes :

i) abattage des coléoptères,
ii) pressage des coléoptères pour obtenir un gâteau de presse,
iii) séchage du gâteau de presse, et
iv) broyage du gâteau de presse,

dans lequel l'étape de broyage du gâteau de presse est réalisée à une taille de particules comprise entre 300 $\mu$m et 1 mm.

Plus particulièrement, dans ce troisième mode de réalisation du procédé selon l'invention, l'étape de pressage des coléoptères peut être réalisée à chaud. Alternativement, l'étape de pressage pourra être précédée d'une étape de broyage des coléoptères.

L'invention concerne enfin l'utilisation de la poudre de coléoptères selon l'invention, dans l'alimentation humaine ou animale.

Avantageusement, la poudre de coléoptères selon l'invention peut être utilisée dans l'alimentation des animaux de compagnie tels que les chiens, les chats, les oiseaux, les poissons, les reptiles, les rongeurs.

Plus particulièrement, la poudre de coléoptères selon l'invention peut être utilisée dans l'aquaculture (poissons, crustacés), l'alimentation des volailles (poulet), porcins, ruminants (bovins, ovins, caprins, équins), visons.

Enfin, la poudre de coléoptères selon l'invention peut être avantageusement utilisée en remplacement d'une farine protéique.

Par farine protéique, on vise plus particulièrement une farine de poisson, un poudre de lait ou de lactosérum, une farine de concentré de soja (« CSP »), de la farine de viande, telle que par exemple de type farine de volailles (« Poultry Meal »).

Le remplacement peut être partiel ou total.

Préférentiellement, la poudre de coléoptères selon l'invention est utilisée en remplacement partiel ou total d'une farine de poisson, tel qu'un remplacement à 50 ou 100%.

D'autres caractéristiques et avantages de l'invention, apparaîtront dans les exemples qui suivent, donnés à titre illustratif, avec référence à :

- La Figure 1, qui est un diagramme illustrant les variations de températures de l'eau et des niveaux d'oxygène dissout dans les réservoirs où ont été élevés les truites nourries avec différentes dose de poudre de coléoptères selon l'invention,
- La Figure 2, qui comporte deux diagrammes illustrant l'impact sur le poids corporel final (Fig. 2A) et l'indice de consommation (Fig. 2B) des truites nourries avec différentes dose de poudre de coléoptères selon l'invention,
- La Figure 3, qui illustre la répartition des lipides issus de l'insecte retrouvée dans le jus et le gâteau de presse obtenus par un procédé comportant une étape de pressage ou une étape de broyage puis de pressage,
- La Figure 4, qui est un diagramme représentant l'analyse par chromatographie d'exclusion stérique de la taille des protéines de la poudre de coléoptères selon l'invention.

## EXEMPLE 1 : Procédé de préparation d'une poudre de coléoptère selon l'invention

Les coléoptères utilisés pour préparer la poudre de coléoptères sont des larves de *Tenebrio molitor*. A réception des larves, ces dernières peuvent être stockées à 4°C pendant 0 à 15 jours dans leurs bacs d'élevages avant l'abattage sans dégradation majeure. Le poids des larves (âge) des larves utilisées est variable et par conséquent leur composition peut varier, comme cela est illustré dans le Tableau 1 ci-après :

Tableau 1 : Composition biochimique des larves de *Tenebrio molitor* selon leur poids.

| Biomasse (insectes) | mg | 23 | 35 | 58 | 80 | 108 | 154 |
|---|---|---|---|---|---|---|---|
| Matière sèche | %* | 34 | 34 | 34,2 | 37,9 | 39,6 | 39,5 |
| Cendres | %* | 1,59 | 1,52 | 1,6 | 1,75 | 1,67 | 1,43 |
| Protéines brutes | %* | 22,6 | 22,2 | 22 | 23,2 | 23,1 | 23,2 |
| Lipides | %* | 6,62 | 6,88 | 7,98 | 10,3 | 10,9 | 11,7 |
| *Les % sont exprimés en poids sec par rapport au poids humide de larves. | | | | | | | |

### • Etape 1 : Blanchiment des insectes

Les larves vivantes (+4°C à + 25°C) sont convoyées en couche d'épaisseur comprise entre 2 et 10 cm, sur un tapis à bande perforé (1mm) jusqu'à une chambre de blanchiment. Les insectes sont ainsi blanchis à la vapeur (buses ou lit de vapeur) à 98°C ou bien à l'eau à 100°C (buses d'aspersion) ou en mode mixte (eau + vapeur). Le temps de séjour dans la chambre de blanchiment est compris entre 1 à 15 minutes, idéalement 5 min.

La température des larves en sortie de blanchiment est comprise entre 75°C et 98°C.

### • Etape 2 : Pressage

Les larves, une fois blanchies, sont convoyées jusqu'à la trémie d'alimentation d'une presse mono-vis continue. Les larves lors du passage en presse sont maintenues à une température supérieure à 70°C pour augmenter les rendements de déshuilage. Le principe de déshuilage est de mettre en pression la matière à l'intérieur d'une cage cylindrique au moyen d'un arrangement de vis et de bagues disposées sur l'axe central. La cage est tapissée intérieur de barreaux répartis en section et maintenus écartée par des espaces d'épaisseurs différentes suivantes la zone de travail. Les interstices ainsi ménagés permettent l'écoulement d'une fraction huile et limitant le passage de la matière dite « sèche », la fraction protéique, que l'on appellera « gâteau de presse », participant de la sorte à la mise en pression.

Les rendements de pressage obtenus sont compris entre 48 et 55 %.

$$R_{gâteau} = (masse_{gâteau} / masse_{jus} + masse_{gâteau})$$

Le gâteau de presse obtenu contient 35 à 40 % de matières sèches, 67 à 75 % de protéines et 13 à 17 % de matières grasses, les pourcentages en poids étant donnés sur le poids sec de gâteau de presse.

**• Etape 3 : Séchage**

Le gâteau de presse est ensuite disposé sur plateau en couche fine (2 cm environ) et, est séché en air ventilé/brassé à 90°C pendant 5 heures afin d'obtenir un gâteau de presse ayant une teneur en matière sèche supérieure à 92%.

Cette étape permet de se prémunir de toute contamination ayant eu lieu depuis l'abattage.

L'Aw (activité en eau) en sortie séchage est de 0,35. Les résultats microbiologiques montrent une absence de Salmonella spp (méthode : IRIS Salmonella BKR 23/07-10/11) et des valeurs en Entérobactéries inférieures à 10 UFC/g (méthode : NF ISO 2128-2, décembre 2004, 30°C et 37°C).

**• Etape 4 : Broyage**

Le gâteau de presse séché, comportant majoritairement des protéines, est enfin broyé à l'aide d'un broyeur à marteau continu (6 mobiles réversibles - épaisseur 8 mm). Le broyeur est alimenté par une trémie avec trappe de réglage de débit (180kg/h). La grille perforée utilisée pour contrôler la granulométrie en sortie est de 0,8 mm. La vitesse de rotation du moteur est de 3000tr/min *(motorisation électrique, puissance absorbée 4kW (5,5 CV)).*

**EXEMPLE 2 : Caractérisation de la poudre de coléoptères selon l'invention**

La poudre de coléoptères préparée à l'Exemple 1 a été caractérisée.

**1. Analyses**

1.1 Détermination du taux d'humidité

Le taux d'humidité est déterminé selon la méthode issue du règlement CE 152/2009 du 27-01-2009 (103 °C / 4 h).

1.2 Détermination de la quantité de protéines brutes

Les protéines brutes sont déterminées selon la méthode, dite de Dumas, et correspondante à la norme NF EN ISO 16634-1 (2008).

1.3 Détermination de la quantité de chitine

Les fibres alimentaires de la farine des insectes sont essentiellement composées de chitine, cette dernière a donc été dosée suivant la méthode ADAC 991.43. Les valeurs ainsi obtenues sont par conséquent légèrement surestimées.

1.4 Détermination de la quantité de matière grasse

La matière grasse a été déterminée suivant la méthode du règlement CE 152/2009.

1.5 Détermination de la quantité de cendres

Les cendres brutes ont été déterminées selon la méthode relevant du règlement CE 152/2009 du 27-01-2009.

1.6 Détermination de la quantité de phosphore

Le phosphore est dosé par ICP (« induced coupled plasma ») avec étalonnage interne.

1.7 Détermination de l'énergie

La valeur énergétique est obtenue avec les coefficients du règlement UE 1169/2011.

1.8 Détermination des quantités en acides aminés et en acides gras

Cette détermination a été effectuée par chromatographie en phase gazeuse après hydrolyse et dérivatisation des acides aminés et acides gras respectivement.

1.9 Détermination de la digestibilité pepsique

La digestibilité pepsique est mesurée par la méthode décrite dans la directive 72/199/CE.

## 2. Résultats

La composition de cette poudre de coléoptères est présentée dans le Tableau 2 ci-après.

| Macronutriment | Unité | Poudre |
|---|---|---|
| Humidité | %* | 5,32 |
| Protéine | %* | 67,09 |
| Chitine | %* | 8,0 |
| Matière grasse | %* | 13,6 |
| Cendre | %* | 3,21 |
| Phosphore total | %* | 0,75 |
| Énergie | MJ/kg | 23,74 |

| Acides aminés | Unité | Poudre |
|---|---|---|
| Arginine | %* | 2,56 |
| Histidine | %* | 1,39 |
| Isoleucine | %* | 2,11 |
| Leucine | %* | 3,99 |
| Lysine | %* | 3,32 |
| Thréonine | %* | 1,87 |
| Valine | %* | 2,91 |
| Méthionine | %* | 1,43 |
| Cystéine | %* | 0,63 |
| Phénylalanine | %* | 1,98 |
| Tyrosine | %* | 2,68 |
| Taurine | %* | 0,42 |
| Acide aspartique + asparagine | %* | 4,51 |
| Acide glutamique + glutamine | %* | 6,36 |
| Alanine | %* | 3,83 |
| Glycine | %* | 2,54 |
| Proline | %* | 3,18 |
| Serine | %* | 2,94 |

| Acides gras | Unité | Poudre |
|---|---|---|
| C12:0 | %* | 0,03 |
| C14:0 | %* | 0,22 |
| C15:0 | %* | 0,01 |
| C16:0 | %* | 1,33 |
| C16:1 | %* | 0,05 |
| C16:1n-7 | %* | 0,16 |
| C17:0 | %* | 0,02 |
| C17:1 | %* | 0,01 |
| C18:0 | %* | 0,35 |
| C18:1n-9 | %* | 3,03 |
| C18:1n-7 | %* | 0,04 |
| C18:2n-6 | %* | 2,96 |
| C18:2tn-6 | %* | 0,02 |
| C18:3n-3 | %* | 0,14 |
| C20:0 | %* | 0,02 |
| C20:1n-9 | %* | 0,01 |
| C20:2n-6 | %* | 0,01 |
| C22:0 | %* | 0,01 |

* Les pourcentages en poids sont exprimés sur le poids total de poudre.

Tableau 2 : Composition de la poudre de coléoptères.

Par ailleurs, une digestibilité pepsique de 90+/-2% est obtenue.

**EXEMPLE 3 : Procédé alternatif de préparation d'une poudre de coléoptère selon l'invention**

200 g de larves de *T. molitor* sont introduits dans un bêcher, placé dans un bain-marie à 100 °C et contenant 200 mL d'eau préalablement portée à ébullition. Après 5 minutes, le bêcher est retiré du bain-marie, les larves sont essorées, puis mixées avec un volume d'eau de 200 mL. Le liquide ainsi obtenu est passé dans une presse de type bi-vis. Le gâteau de presse ainsi obtenu est séché 24 heures dans une étuve à 70 °C, puis broyé à 250 μm. On obtient ainsi une poudre de coléoptère.

**EXEMPLE 4 : Introduction de la pondre de coléoptère selon l'invention dans l'alimentation de poissons**

Dans le présent exemple, l'effet de l'inclusion alimentaire d'une poudre de coléoptères sur la croissance, l'apport alimentaire, la conversion alimentaire, la composition corporelle et la digestibilité apparente des nutriments chez la truite arc-en-ciel a été étudié.

**1. Matériel et méthodes**

**1.1. Poudre de coléoptères**

La poudre de coléoptère mise en oeuvre dans cet exemple est celle obtenue selon l'Exemple 1 et plus amplement décrite dans l'Exemple 2.

**1.2. Régimes expérimentaux**

Un régime à base de farine de poisson (CTRL) a été formulé avec des ingrédients pratiques pour répondre aux besoins nutritionnels connus des truites arc-en-ciel juvéniles. Ce régime CTRL est composé de 25% de farine de poisson, 8% d'autres sources protéiques d'origine marine (farine de calmar et farine de krill), tandis que les sources de protéines restantes étaient un concentré de protéine de soja, de gluten de blé et de gluten de maïs. Sur la base de cette formulation, quatre régimes de tests (Y5, Y7,5, Y15 et Y25) ont été formulés, dans lesquels la farine de poisson a été remplacée par la poudre de coléoptères à des taux respectifs de 20, 30, 60 et 100% (voir le Tableau 3 ci-dessous).

Tableau 3 : Formulation et composition des régimes expérimentaux.

| Ingrédients en % | CTRL | Y5 | Y7.5 | Y15 | Y25 |
|---|---|---|---|---|---|
| Farine de poisson LT70[1] | 25,00 | 20,00 | 17,50 | 10,00 | 0,00 |
| Farine de krill[2] | 3,00 | 3,00 | 3,00 | 3,00 | 3,00 |
| Farine de calmar[3] | 5,00 | 5,00 | 5,00 | 5,00 | 5,00 |
| Poudre de coléoptères | | 5,00 | 750 | 15,00 | 25,00 |
| Concentré de protéines de soja[4] | 14,00 | 14,00 | 14,00 | 14,00 | 14,00 |
| Ingrédients en %*: | CTRL | Y5 | Y7.5 | Y15 | Y25 |
| Gluten de blé[5] | 9,05 | 9,25 | 9,40 | 9,65 | 10,10 |
| Gluten de maïs[6] | 8,20 | 8,20 | 8,20 | 8,20 | 8,20 |
| Farine de soja 48 | 7,50 | 7,50 | 7,50 | 7,50 | 7,50 |
| Pois entier | 6,15 | 5,75 | 5,40 | 4,75 | 3,70 |
| Huile de poisson | 11,50 | 11,50 | 11,50 | 11,50 | 11,50 |
| Huile de colza | 6,00 | 5,80 | 5,70 | 5,40 | 5,00 |
| Pré-mélange de vitamines et minéraux[7] | 1,50 | 1,50 | 1,50 | 1,50 | 1,50 |
| Lécithine de soja | 1,00 | 1,00 | 1,00 | 1,00 | 1,00 |
| Gomme de guar | 0,20 | 0,20 | 0,20 | 0,20 | 0,20 |
| Antioxydant | 0,20 | 0,20 | 0,20 | 0,20 | 0,20 |
| Propionate de sodium | 0,10 | 0,10 | 0,10 | 0,10 | 0,10 |
| Phosphate Mono Calcique | 1,30 | 1,70 | 2,00 | 2,60 | 3,50 |
| DL-méthionine | 0,30 | 0,30 | 0,30 | 0,40 | 0,50 |
| Oxyde d'yttrium[8] | 0,02 | 0,02 | 0,02 | 0,02 | 0,02 |
| | | | | | |

(suite)

| Ingrédients en %*: | CTRL | Y5 | Y7.5 | Y15 | Y25 |
|---|---|---|---|---|---|
| Matière sèche (MS), %* | 93,4 ± 0,0 | 93,1 ± 0,0 | 93, ± 0,1 | 95,0 ± 0,0 | 93,2 ± 0,0 |
| Protéine brute, % MS** | 48,5 ± 0,0 | 48,5 ± 0,1 | 48,5 ± 0,0 | 48,5 ± 0,0 | 48,5 ± 0,1 |
| Matières grasses brutes,% MS** | 22,7 ± 0,2 | 22,7 ± 0,1 | 22,6 ± 0,2 | 22,7 ± 0,2 | 22,7 ± 0,2 |
| Cendre, % MS** | 9,4 ± 0,0 | 8,8 ± 0,0 | 8,7 ± 0,1 | 8,1 ± 0,0 | 7,4 ± 0,0 |
| Chitine, % MS** | 0,06 | 0,46 | 0,66 | 1,26 | 2,06 |
| Énergie brute, MJ/kg de MS | 23,2 ± 0,2 | 23,2 ± 0,0 | 23,2 ±0,0 | 23,2 ± 0,1 | 23,2 ± 0,1 |

* % de matière sèche par rapport au poids total de la composition
** % en poids sec par rapport au poids total de la matière sèche
[1] Farine de poisson péruvienne LT70 : 71% de protéines brutes (PB), 11% de matières grasses brutes (MGB), EXALMAR, Pérou; [2] Farine de krill : 61% PB, 19% MGB, Aker BioMarine Antarctic AS, Norvège;[3] Super Prime sans viscères : 82% PB, 3.5% MGB, Sopropêche, France; [4] Soycomil P: 62% PB, 0.7% MGB, ADM, Pays-Bas; [5] VITEN: 84.7% PB, 1.3% MGB, ROQUETTE, France; [6] Farine de gluten de maïs : 61% PB, 6% MGB, COPAM, Portugal; [7] PREMIX Lda, Portugal. Vitamines (IU ou mg/kg régime) : Acétate de DL-alpha tocophérol, 100 mg; Bisulfate de sodium et de ménadione, 25 mg; Acétate de rétinyle, 20 000 UI; DL-cholécalciférol, 2000 IU; thiamine, 30 mg; riboflavine, 30 mg; pyridoxine, 20 mg; cyanocobalamine, 0,1 mg; acide nicotinique, 200mg; acide folique, 15 mg; acide ascorbique, 1000 mg; inositol, 500 mg; biotine, 3 mg; pantothénate de calcium, 100 mg; chlorure de choline, 1000 mg, bétaïne, 500mg. Minéraux (g ou mg/kg) : carbonate de cobalt, 0.65mg; sulfate de cuivre, 9 mg; sulfate ferrique, 6 mg; iodure de potassium, 0,5 mg; oxyde de manganèse, 9,6 mg; sélénite de sodium, 0,01 mg; sulfate de zinc, 7,5 mg; chlorure de sodium, 400 mg; carbonate de calcium, 1,86 g; blé excipient ; [8] l'oxyde d'yttrium a été incorporé dans seulement une fraction des aliments utilisés pour les mesures de digestibilité.

Les niveaux de farine de calmar et de krill ont été maintenus constants parmi tous les régimes afin de garantir une haute palatabilité. Des ajustements mineurs sur la formulation des régimes testés ont été faits pour maintenir les conditions isoazotées (protéine brute, 48,5% de MS), isolipidique (22,7% MS) et isoénergétique (énergie brute, 23,2 MJ/ kg MS). Les niveaux de supplémentation en méthionine et en phosphate monocalcique dans les régimes testés ont été ajustés pour correspondre à ceux trouvés dans l'alimentation CTRL.

Les régimes ont été fabriqués par extrusion (tailles des granulés : 1,2 et 2,0 mm) par une extrudeuse à deux vis CLEXTRAL BC45 à échelle pilote avec un diamètre de vis de 55,5 mm et une gamme de température de 119 à 123°C. Lors de l'extrusion, tous les lots d'aliments extrudés ont été séchés dans un séchoir à lit fluidisé vibrant (modèle DR100, TGC Extrusion, France). Après refroidissement des granulés, les huiles ont été ajoutées par revêtement sous vide (modèle PG-10VCLAB, Dinnisen, Pays-Bas). Pendant toute la durée de l'essai, les aliments expérimentés ont été stockés à température ambiante, mais dans un emplacement frais et aéré. Des échantillons représentatifs de chaque régime ont été prélevés pour analyse (Tableaux 4-5).

Tableau 4 : Profil en acides aminés des régimes expérimentaux.

| Acides aminés | CTRL | Y5 | Y7,5 | Y15 | Y25 |
|---|---|---|---|---|---|
| Arginine | 4,62 ± 0,23 | 4,53 ± 0,02 | 4,49 ± 0,23 | 4,27 ± 0,09 | 3,89 ± 0,09 |
| Histidine | 1,47 ± 0,11 | 1,56 ± 0,02 | 1,54 ± 0,09 | 1,46 ± 0,07 | 1,50 ± 0,08 |
| Isoleucine | 2,31 ± 0,01 | 2,52 ± 0,01 | 2,53 ± 0,01 | 2,46 ± 0,02 | 2,49 ± 0,00 |
| Leucine | 4,51 ± 0,08 | 4,44 ± 0,01 | 4,68 ± 0,05 | 4,46 ± 0,02 | 4,56 ± 0,01 |
| Lysine | 3,09 ± 0,19 | 3,09 ± 0,01 | 3,02 ± 0,17 | 2,94 ± 0,01 | 2,97 ± 0,03 |
| Thréonine | 2,32 ± 0,03 | 2,37 ± 0,00 | 2,31 ± 0,03 | 2,14 ± 0,05 | 2,15 ± 0,02 |
| Valine | 2,75 ± 0,00 | 2,87 ± 0,02 | 3,00 ± 0,03 | 3,08 ± 0,01 | 3,18 ± 0,01 |
| Méthionine | 1,71 ± 0,15 | 1,71 ± 0,01 | 1,75 ± 0,06 | 1,74 ± 0,02 | 1,63 ± 0,02 |
| Cystéine | 0,35 ± 0,02 | 0,34 ± 0,00 | 0,31 ± 0,02 | 0,33 ± 0,00 | 0,34 ± 0,00 |
| Phénylalanine | 3,30 ± 0,00 | 3,06 ± 0,01 | 2,92 ± 0,15 | 2,85 ± 0,01 | 2,56 ± 0,00 |

(suite)

| Acides aminés | CTRL | Y5 | Y7,5 | Y15 | Y25 |
|---|---|---|---|---|---|
| Tyrosine | 2,44 ± 0,11 | 2,48 ± 0,00 | 2,67 ± 0,14 | 2,92 ± 0,04 | 3,14 ± 0,12 |
| Taurine | 0,20 ± 0,01 | 0,20 ± 0,00 | 0,21 ± 0,01 | 0,06 ± 0,00 | 0,04 ± 0,00 |
| Les teneurs sont indiquées en % en poids sur le poids total de granulés avant séchage. | | | | | |

Tableau 5 : Synthèse du profil en acides gras des régimes expérimentaux.

| Acides gras | CTRL | Y5 | | Y15 | Y25 |
|---|---|---|---|---|---|
| C14:0 | 0,40 ± 0,00 | 0,40 ± 0,00 | 0,38 ± 0,00 | 0,43 ± 0,00 | 0,38 ± 0,00 |
| C16:0 | 1,86 ± 0,01 | 1,89 ± 0,01 | 1,82 ± 0,02 | 2,11 ± 0,01 | 1,94 ± 0,02 |
| C16:1n-7 | 0,48 ± 0,00 | 0,48 ± 0,00 | 0,44 ± 0,00 | 0,50 ± 0,00 | 0,42 ± 0,01 |
| C18:0 | 0,49 ± 0,00 | 0,50 ± 0,01 | 0,47 ± 0,01 | 0,54 ± 0,00 | 0,50 ± 0,01 |
| C18:1n-9 | 1,62 ± 0,01 | 1,74 ± 0,01 | 1,69 ± 0,01 | 2,08 ± 0,01 | 2,06 ± 0,02 |
| C18:1n-7 | 0,26 ± 0,00 | 0,25 ± 0,00 | 0,23 ± 0,00 | 0,25 ± 0,00 | 0,21 ± 0,00 |
| C18:2n-6 | 0,79 ± 0,00 | 0,94 ± 0,01 | 1,05 ± 0,01 | 1,36 ± 0,01 | 1,53 ± 0,02 |
| C18:3n-3 | 0,13 ± 0,00 | 0,13 ± 0,00 | 0,13 ± 0,00 | 0,14 ± 0,00 | 0,12 ± 0,00 |
| C18:4n-3 | 0,10 ± 0,00 | 0,10 ± 0,00 | 0,09 ± 0,00 | 0,10 ± 0,00 | 0,08 ± 0,00 |
| C20:1n-9 | 0,20 ± 0,00 | 0,19 ± 0,00 | 0,17 ± 0,00 | 0,18 ± 0,00 | 0,14 ± 0,00 |
| C20:4n-6 | 0,14 ± 0,00 | 0,13 ± 0,00 | 0,12 ± 0,00 | 0,14 ± 0,00 | 0,12 ± 0,00 |
| C20:5n-3 | 0,72 ± 0,00 | 0,71 ± 0,01 | 0,65 ± 0,00 | 0,70 ± 0,00 | 0,57 ± 0,01 |
| C22:1n-11 | 0,14 ± 0,00 | 0,13 ± 0,00 | 0,11 ± 0,00 | 0,12 ± 0,00 | 0,08 ± 0,00 |
| C22:5n-3 | 0,14 ± 0,00 | 0,13 ± 0,00 | 0,12 ± 0,00 | 0,13 ± 0,00 | 0,10 ± 0,00 |
| C22:6n-3 | 1,45 ± 0.01 | 1,44 ± 0.01 | 1,33 ± 0.01 | 1,46 ± 0.01 | 1,21 ± 0,02 |
| Les teneurs sont indiquées en % en poids sur le poids total de granulés avant séchage. | | | | | |

### 1.3. Essai sur la performance de croissance

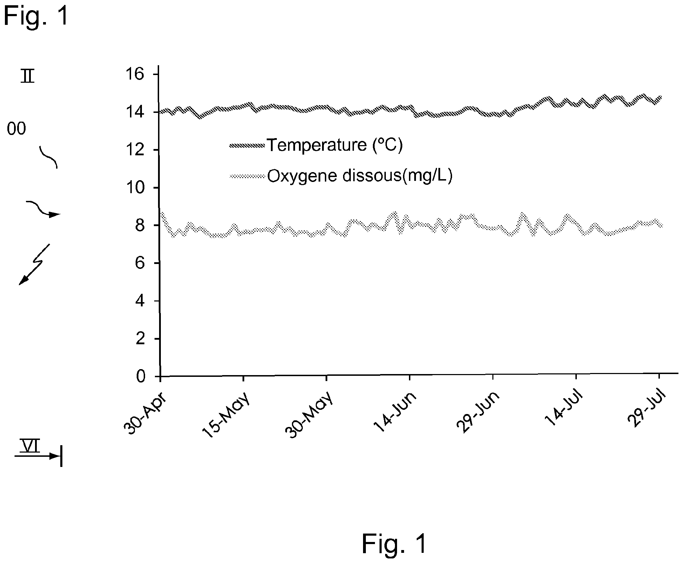

Des groupes en trois exemplaires de 35 truites arc en ciel (*Oncorhynchus mykiss*), avec un poids corporel initial (PCI) de 5,01± 0,1 g ont été nourris avec l'un des cinq régimes expérimentaux pendant 90 jours. Les poissons ont grandis dans des réservoirs circulaires en fibre de verre (volume : 250 L) alimentés en eau douce à écoulement continu, à des températures comprises entre 14,1 ± 0,3°C et des niveaux d'oxygène dissous au-dessus de 7,4 mg/L (voir Figure 1). Les poissons ont été soumis par des conditions d'été à des changements de photopériode naturelle (mai-juillet). Les poissons ont été nourris à satiété apparente, à la main, trois fois par jour (9h00, 14h00 et 18h00) en semaine et deux fois par jour les week-ends (10h00 et 16h00), avec le plus grand soin pour éviter le gaspillage d'aliments. L'aliment distribué a été quantifié tout au long de l'étude. Des poissons anesthésiés ont été pesés individuellement au début et à la fin de l'étude et le groupe a été pesé au jour 28 et au jour 60. Au début, 15 poissons du même stock initial ont été échantillonnés et stockés à -20°C pour une analyse ultérieure de la composition corporelle intégrale. Après 90 jours d'alimentation expérimentale, 6 poissons de chaque réservoir ont été échantillonnés dans le même but.

### 1.4. Mesures de digestibilité apparente

À la fin de l'essai de croissance et suivant tous les échantillonnages associés, 12 poissons (poids corporel : 45 g) de chaque réservoir réplique ont été utilisés pour déterminer la digestibilité apparente de la matière sèche, des protéines, des lipides, de l'énergie et du phosphore, par la méthode indirecte avec les régimes identiques contenant l'oxyde d'yttrium (200 mg/kg) comme traceur inerte. Les poissons ont été stockés dans des réservoirs cylindro-coniques (volume : 60 L; taux d'écoulement de l'eau : 3,7 L/min; niveaux d'oxygène dissous supérieures à 6,4 mg/L), à une température de l'eau constante à 14°C. Les poissons ont été adaptés pendant 10 jours aux conditions d'élevage et aux régimes expérimentaux. Ensuite, les poissons ont été nourris une fois par jour (10h00), à la main en léger excès. Après un nettoyage en profondeur des bassins d'élevage pour retirer tous les résidus d'aliments, les matières fécales ont été prélevées quotidiennement pendant les 8 jours suivants en utilisant le système de filtration continu de l'eau de sortie (système Choubert-INRA). Après une collecte quotidienne, les matières fécales ont été congelées à -20°C. Les matières fécales mélangées provenant de chaque groupe de poissons ont été lyophilisées avant l'analyse. Chaque régime alimentaire a été testé en triple exemplaire.

Les coefficients de digestibilité apparente (CDA) des nutriments et de l'énergie alimentaire dans les régimes expérimentaux ont été calculés selon la formule :

$$CDA(\%) = 100 - \left[ \frac{\%\ concentration\ Y_2O_3\ aliment}{\%\ concentration\ Y_2O_3\ feces} \times \frac{\%\ Energie\ ou\ nutriments\ dans\ feces}{\%\ Energie\ ou\ nutriments\ dans\ aliment} \right]$$

### 1.5. Méthodes analytiques

Les ingrédients de test, les régimes alimentaires et les matières fécales lyophilisées ont été broyés avant analyse. Les échantillons du corps entier ont été hachés, mélangés, et un échantillon représentatif a été lyophilisé et homogénéisé avec un moulin de laboratoire avant analyse. L'analyse de la composition chimique de l'ingrédient, des régimes alimentaires, des matières fécales et du poisson entier a été faite en utilisant les procédures suivantes : matière sèche après séchage à 105°C pendant 24 h; cendres par combustion à 550°C pendant 12 h; protéine brute (N x 6,25) par une technique de combustion éclair suivie d'une séparation par chromatographie en phase gazeuse et détection de conductivité thermique (LECO FP428) ; la matière grasse par extraction au dichlorométhane (Soxhlet) ; le phosphore total selon la méthode ISO / DIS 6491 en utilisant le réactif vanado-molybdique ; l'énergie brute dans une bombe calorimétrique adiabatique. L'oxyde d'yttrium dans les aliments et les fèces a été déterminé par la méthode ICP-AES.

Pour les analyses d'acides aminés totaux, les ingrédients de test et les régimes de test ont été hydrolysés (6 M de HCL à 116°C pendant 22 h dans des flacons en verre rincés à l'azote), puis dérivatisés avec un réactif fluor AccQ (6-aminoquinolyl-N-hydroxysuccinimidyle) selon la méthode de Tag AccQ (Waters, USA). Les analyses ont été effectuées par une chromatographie en phase liquide à haute performance (HPLC) dans un système d'analyse des acides aminés en phase inverse, en utilisant la norvaline comme étalon interne. Le tryptophane n'a pas été déterminé car il est partiellement détruit par l'hydrolyse acide. Les pics résultants ont été analysés avec le logiciel EMPOWER (Waters, USA). Pour l'analyse des acides gras, les lipides ont été extraits selon la méthode de Folch et al. (1957) et par la suite, la composition en acides gras des filets a été déterminée par une analyse des esters méthyliques par chromatographie en phase gazeuse, selon le mode opératoire de Lepage et Roy (1986).

### 1.6. Critère pour l'évaluation de la croissance et l'utilisation des nutriments

PCI (g): Poids corporel initial.
PCF (g): Poids corporel final.
Taux de croissance spécifique, TCS (%/ jour): (Ln PCF - Ln PCI) x 100/days.
Indice de consommation, IC : ratio alimentaire brute / prise de poids.
Apport alimentaire volontaire, AAV (%PC/jour) : (ration alimentaire brute / (PCI+PCF) / 2 /jours) x 100.
Coefficient d'efficacité protéique CEP : prise de poids mouillé / apport en protéine brute.
Rétention (% de l'apport) : 100 x (PCF x teneur finale en nutriments de la carcasse - PCI x teneur initiale en nutriments de la carcasse) / apport en nutriment.

### 1.7. Analyse statistique

Les données sont présentées par la moyenne de trois répétitions ± l'écart type. Les données ont été soumises à une analyse de la variance à un facteur. Avant ANOVA, les valeurs exprimées en % ont été soumises à une transformation de la racine carrée arc sinus. La signification statistique a été testée à un niveau d'une probabilité de 0,05. Tous les tests statistiques ont été effectués en utilisant le logiciel IBM SPSS V21.

## 2. Résultats

### 2.1. Performance de croissance

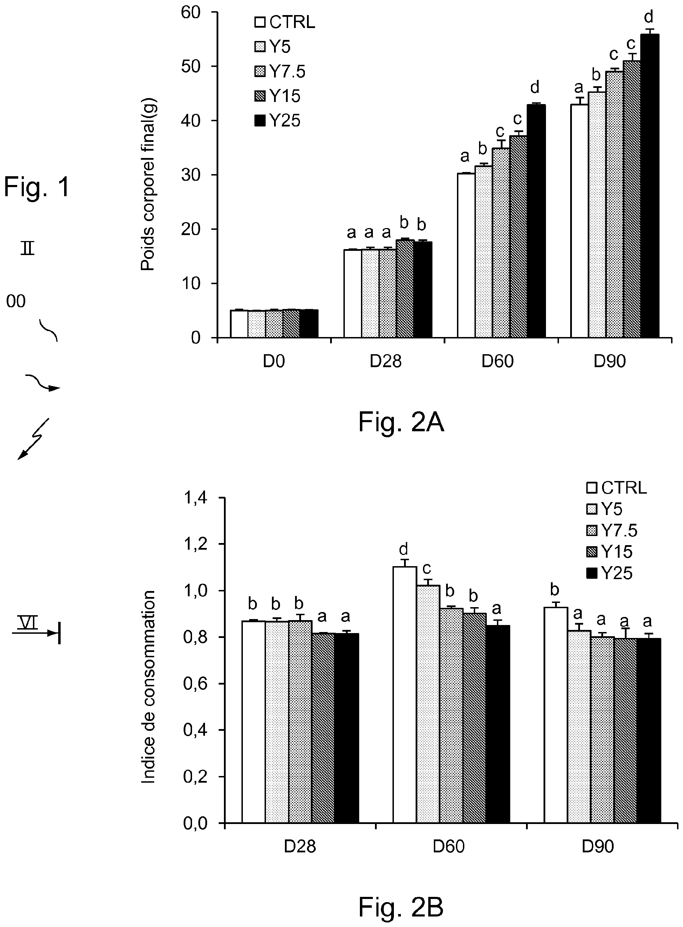

Les données sur les performances de croissance, la conversion alimentaire et l'efficacité protéique de la truite arc-en-ciel nourrie durant 28, 60 et 90 jours avec les régimes expérimentaux sont reportées dans les Tableaux 6-8 et la Figure 2. Aucune mortalité n'est survenue au cours de l'essai.

Tableau 6 : Performances de croissance au jour 28.

| Régime | CTRL | Y5 | Y7.5 | Y15 | Y25 |
|---|---|---|---|---|---|
| PCI (g) | 5,0 ± 0,1 | 4,9 ± 0,1 | 5,0 ± 0,1 | 5,1 ± 0,1 | 5,1 ± 0,1 |
| PCF (g) | 16,1 ± 0,1 [a] | 16,2 ± 0,5 [a] | 16,2 ± 0,5 [a] | 17,9 ± 0,3 [b] | 17,6 ± 0,4 [b] |
| TCS, %/j | 4,19 ± 0,12 [a] | 4,26 ± 0,13 [a] | 4,20 ± 0,07 [d] | 4,50 ± 0,07 [b] | 4,45 ± 0,06 [b] |
| IC | 0,87 ± 0,01 [b] | 0,87 ± 0,02 [b] | 0,87 ± 0,03 [b] | 0,81 ± 0,00 [a] | 0,81 ± 0,01 [a] |
| Apport alimentaire, %PCM/j | 3,27 ± 0,07 | 3,31 ± 0,09 | 3,28 ± 0,09 | 3,25 ± 0,03 | 3,22 ± 0,07 |
| CEP | 2,55 ± 0,02 [a] | 2,56 ± 0,05 [a] | 2,55 ± 0,08 [a] | 2,66 ± 0,01 [ab] | 2,72 ± 0,05 [b] |
| Les valeurs sont les moyennes ± l'écart type (n=3). Les valeurs au sein d'une rangée avec des exposants différents diffèrent de façon significative (P <0,05). | | | | | |

Après 28 jours d'alimentation expérimentale (Tableau 6), les poissons ont plus que triplé leur poids corporel initial. L'apport en aliment était élevé (3,22 - 3,31% PCM/jour) et n'a pas été affecté (P> 0,05) par les doses d'incorporation croissantes en poudre de coléoptères. Cette observation suggère que la poudre de coléoptères n'a eu aucun effet négatif sur la palatabilité et même qu'elle pourrait compenser l'élimination totale de la farine de poisson sans compromettre l'apport alimentaire. Le taux de croissance a varié de 4,19 à 4,50% / jour. En comparaison avec le traitement CTRL, tandis que les régimes Y5 et Y7,5 n'ont pas affecté le PCF et le TCS, les régimes Y15 et Y25 ont entraîné une augmentation significative (P <0,05) du PCF et du TCS. Les valeurs de l'indice de consommation varient entre 0,81 et 0,87. En comparaison avec le CTRL, l'inclusion de poudre de coléoptères à 5 et 7,5% (régimes Y5 et Y7,5%) n'a pas affecté l'IC. Cependant, les niveaux d'inclusion élevés de poudre de coléoptères (régimes de Y15 et Y25) ont conduit à une réduction significative de l'IC (P <0,05). Le coefficient d'efficacité protéique (CEP) a varié entre 2,55 et 2,72. Les poissons nourris avec un régime Y25 ont montré une augmentation significative de CEP, par rapport à ceux nourris avec les régimes CTRL, Y5 et Y7,5.

Tableau 7 : Performances de croissance au jour 60.

| Régime | CTRL | Y5 | Y7,5 | Y15 | Y25 |
|---|---|---|---|---|---|
| PCI (g) | 5,0 ± 0,1 | 4,9 ± 0,1 | Y7,5 5,0 ± 0,1 | 5,1 ± 0,1 | 5,1 ± 0,1 |
| PCF (g) | 30,3 ± 0,1 [a] | 31,6 ± 0,5 [a] | 34,9 ± 1,5 [b] | 37,2 ± 0,9 [c] | 42,9 ± 0,4 [d] |
| TCS, %/j | 3,00 ± 0,04 [a] | 3,10 ± 0,04 [b] | 3,24 ± 0,04 [c] | 3,31 ± 0,05 [c] | 3,57 ± 0,04 [d] |
| IC | 1,10 ± 0,03 [d] | 1,02 ± 0,03 [c] | 0,92 ± 0,01 [b] | 0,90 ± 0,02 [b] | 0,85 ± 0,02 [a] |
| CEP | 2,01 ± 0,06 [a] | 2,17 ± 0,06 [b] | 2,40 ± 0,02 [c] | 2,46 ± 0,06 [cd] | 2,56 ± 0,07 [d] |
| Les valeurs sont les moyennes ± l'écart type (n=3). Les valeurs au sein d'une rangée avec des exposants différents diffèrent de façon significative (P <0,05). | | | | | |

Après 60 jours d'alimentation expérimentale (Tableau 7), les poissons du meilleur traitement performant ont montré une augmentation de 8 fois le poids corporel initial. Le taux de croissance a varié de 3,00 à 3,57 % / jour. En comparaison avec le traitement CTRL, tous les régimes avec la poudre de coléoptères ont montré une augmentation significative (P <0,05) du TCS. Les valeurs de l'IC ont varié entre 0,85 et 1,10 et en comparaison avec le CTRL, l'inclusion de la poudre de coléoptères à toutes les doses testées a entraîné une réduction significative de l'IC (P <0,05). Le coefficient d'efficacité protéique (CEP) a varié entre 2,01 et 2,56. La valeur la plus basse du CEP a été trouvée chez les poissons nourries avec un régime CTRL, tandis qu'une amélioration du CEP a été étroitement associée aux doses croissantes de la poudre de coléoptères

Tableau 8 : Performances de croissance au jour 90.

| Régime | CTRL | Y5 | Y7,5 | Y15 | Y25 |
|---|---|---|---|---|---|
| PCI (g) | 5,0 ± 0,1 | 4,9 ± 0,1 | 5,0 ± 0,1 | 5,1 ± 0,1 | 5,1 ± 0,1 |
| PCF (g) | 42,9 ± 1,3 [a] | 45,2 ± 1,0 [b] | 49,0 ± 0,6 [c] | 51,0 ± 1,4 [c] | 55,9 ± 10 [a] |
| TCS, %/j | 2,39 ± 0,06 [a] | 2,47 ± 0,02 [b] | 2,54 ± 0,03 [b] | 2,56 ± 0,05 [b] | 2,67 ± 0,04 [c] |
| IC | 0,93 ± 0,02 [b] | 0,83 ± 0.03 [a] | 0,80 ± 0,02 [a] | 0,79 ± 0,04 [a] | 0,79 ± 0,02 [a] |
| CEP | 2,38 ± 0,06 [a] | 2,68 ± 0,10 [b] | 2,76 ± 0,06 [b] | 2,80 ± 0,15 [b] | 2,74 ± 0,08 [b] |
| Les valeurs sont les moyennes ± l'écart type (n=3). Les valeurs au sein d'une rangée avec des exposants différents diffèrent de façon significative (P <0,05). | | | | | |

À la fin de l'essai, 90 jours d'alimentation expérimentale (Tableau 8), les poissons du meilleur traitement performant ont montré une augmentation de 11 fois le poids corporel initial. En comparaison avec le poisson CTRL, ceux nourris les régimes riches en insectes ont montré une augmentation significative du poids corporel final (P <0,05). Cette augmentation a été liée à la dose, avec une augmentation modérée pour le régime Y5, intermédiaire pour Y7,5 et Y15, et la plus élevée pour Y25. Le taux de croissance spécifique (TCS) a varié entre 2,39 et 2,67% / jour, avec une valeur minimale trouvée chez les poissons nourris avec un régime CTRL, tandis que ceux nourris avec des aliments contenant de la poudre de coléoptères ont montré des valeurs de TCS significativement plus élevées (p <0,05). Indépendamment du niveau d'incorporation, la poudre de coléoptères ont conduit à une réduction significative de l'IC (P <0,05). En comparaison avec le traitement CTRL, tous les régimes de repas d'insectes ont conduit à une augmentation significative des valeurs du CEP (P <0,05).

## 2.2. Composition du corps entier

Les données sur la composition du corps entier de la truite à la fin de l'essai sont présentées dans le Tableau 9. Les traitements alimentaires n'ont eu aucun effet (P> 0,05) sur la teneur en humidité, en protéines, en lipides, en cendres, en phosphore et en énergie du poisson entier.

Tableau 9 : Composition du corps entier de la truite nourrie avec les divers traitements alimentaires.

| Composition corporelle | CTRL | Y5 | Y7.5 | Y15 | Y25 |
|---|---|---|---|---|---|
| Humidité, % | 70,1 ± 0,6 | 70,7 ± 0,4 | 71,1 ± 0,4 | 70,5 ± 0,5 | 10,7 ± 1,2 |
| Protéine, % | 14,8 ± 0,6 | 14,8 ± 0,3 | 15,0 ± 0,5 | 15,2 ± 0,3 | 15,2 ± 0,7 |
| Matière grasse, % | 12,2 ± 0,2 | 11,5 ± 0,4 | 11,0 ± 0,3 | 11,6 ± 0,1 | 11,8 ± 0,9 |
| Cendre, % | 1,9 ± 0,0 | 2,2 ± 0,2 | 2,1 ± 0,3 | 2,1 ± 0,0 | 2,2 ± 0,1 |
| Phosphore, % | 0,4 ± 0,0 | 0,4 ± 0,0 | 0,4 ± 0,0 | 0,4 ± 0,0 | 0,4 ± 0,0 |
| Energie, kJ/g | 8,2 ± 0,1 | 8,0 ± 0,0 | 8,0 ± 0,0 | 8,0 ± 0,2 | 8,2 ± 0,4 |
| *Les pourcentages sont des pourcentages en poids sur le poids total du poisson. Les valeurs sont les moyennes ± l'écart type (n=3). Poisson initial : humidité 75,0%; protéine 14,1%; matières grasses 8,7% ; cendres 2,2%; phosphore 0,4%, énergie 6,7 kJ / g. | | | | | |

## 2.3. Rétention des nutriments

Les valeurs des nutriments et de la rétention de l'énergie (exprimées en pourcentage de l'apport) sont présentées dans le Tableau 10. En comparaison avec le traitement CTRL, les poissons nourris avec des régimes riches en poudre de coléoptères ont montré une augmentation significative de protéine et de la rétention d'énergie (P <0,05). De même, les régimes Y7,5, Y15 et Y25 ont montré une rétention en P significativement plus élevé que le CTRL (P <0,05). La rétention de matière grasse n'a pas été affectée par les régimes alimentaires (P> 0,05).

Tableau 10 : Rétention des nutriments et de l'énergie dans la truite alimentée par les divers régimes alimentaires.

| Rétention % apport | CTRL | Y5 | Y7,5 | Y15 | Y25 |
|---|---|---|---|---|---|
| Protéine | 35,5 ± 2,5[a] | 39,8 ± 0,7[b] | 41,6 ± 0,4[b] | 42,8 ± 2,2[b] | 41,9 ± 2,2[b] |
| Matière grasse | 64,4 ± 2,1 | 68,0 ± 4,9 | 66,8 ± 3,3 | 71,5 ± 3,4 | 70,9 ± 6,7 |
| Phosphore | 30,5 ± 0,7[a] | 32,7 ± 1,8[ab] | 34,0 ± 0,7[b] | 33,9 ± 1,7[b] | 33,8 ± 1,1[b] |
| Énergie | 42,0 ± 0,8[a] | 45,4 ± 1.6[b] | 47,1 ± 1.4[b] | 47,8 ± 1,81[b] | 48,0 ± 2,9[b] |
| Les valeurs sont les moyennes ± l'écart type (n=3). Les valeurs au sein d'une rangée avec des exposants différents diffèrent de façon significative (P <0,05). | | | | | |

### 2.4. Digestibilité apparente

La composition des matières fécales collectées à partir de la truite nourrie par les divers traitements alimentaires est présentée au Tableau 11.

Tableau 11 : Composition des matières fécales de la truite nourrie avec les divers régimes alimentaires.

| Composition de la matière fécale | CTRL | Y5 | Y7,5 | Y15 | Y25 |
|---|---|---|---|---|---|
| Oxyde d'yttrium, (mg/kg) | 1384 ± 39 | 1395 ± 94 | 1415 ± 61 | 1369 ± 62 | 1411 ± 43 |
| Protéine, % MS* | 19,63 ± 0,06 | 19,67 ± 0,24 | 19,76 ± 0,34 | 19,70 ± 0,38 | 19,20 ± 0,41 |
| Matières grasses, % MS* | 4,37 ± 0,06 | 4,33 ± 0,19 | 4,28 ± 0,24 | 4,30 ± 0,06 | 4,20 ± 0,33 |
| Phosphore, % MS* | 2,64 ± 0,06 | 2,77 ± 0,08 | 2,65 ± 0,10 | 2,54 ± 0,15 | 2,62 ± 0,09 |
| Énergie, kJ/g MS | 23,24 ± 0,16 | 23,14 ± 0,40 | 23,47 ± 0,47 | 22,88 ± 0,16 | 23,09 ± 0,16 |
| *% en poids sur le poids total de matière sèche matière fecale. Les valeurs sont les moyennes ± l'écart type (n=3). | | | | | |

Les coefficients de digestibilité apparente (CDA %) pour les différents nutriments et l'énergie sont présentés dans le Tableau 12. L'augmentation des doses d'incorporation de la poudre de coléoptères n'a eu aucun effet significatif (P> 0,05) sur la digestibilité apparente de la matière sèche, des protéines, de la matière grasse, du phosphore et de l'énergie.

Tableau 12 : Digestibilité apparente des nutriments et de l'énergie dans la truite.

| CDA % | CTRL | Y5 | Y7,5 | Y15 | Y25 |
|---|---|---|---|---|---|
| Matière sèche | 84,2 ± 0,4 | 84,2 ± 1,0 | 84,3 ± 0,7 | 84,0 ± 0,7 | 84,3 ± 0,5 |
| Protéine | 93,6 ± 0,2 | 93,6 ± 0,4 | 93,6 ± 0,2 | 93,5 ± 0,4 | 93,8 ± 0,1 |
| Matière grasse | 97,0 ± 0,1 | 97,0 ± 0,1 | 97,0 ± 0,2 | 97,0 ± 0,2 | 97,1 ± 0,3 |
| Phosphore, % d'apport | 69,9 ± 1,4 | 68,3 ± 1,5 | 70,5 ± 24 | 71,4 ± 2,9 | 70,3 ± 1,8 |
| Énergie, % d'apport | 84,1 ± 0,4 | 84,3 ± 0,8 | 84,1 ± 1,0 | 84,2 ± 0,6 | 84,4 ± 0,6 |
| Les valeurs sont les moyennes ± l'écart type (n=3). | | | | | |

### 3. Conclusion

À la fin des 90 jours d'alimentation expérimentale, la performance globale de la croissance peut être considérée comme très satisfaisante et dans une gamme plus élevée pour les jeunes truites arc en ciel, avec des valeurs de TCS pour la durée totale du test variant entre 2,4 et 2,7% / jour. Dans les traitements les plus performants, les poissons ont montré une augmentation de 11 fois leur poids corporel initial. Les taux de conversion alimentaire parmi les traitements ont varié entre 0,79 et 0,93, ce qui suggère une bonne adéquation nutritionnelle des aliments et des bonnes pratiques alimentaires.

Les données expérimentales générées dans cet exemple permettent d'affirmer que :

- L'incorporation de doses croissantes de poudre de coléoptères (5, 7,5, 15 et 25%) avec une réduction concomitante de la farine de poisson a été progressivement liée à une augmentation significative du poids corporel du poisson.
- Tous les régimes contenant la poudre de coléoptères ont montré une amélioration significative des TCS, IC et du CEP.
- Les doses d'incorporation croissantes de poudre de coléoptères n'ont eu aucun effet sur la composition du corps entier de la truite.
- Les doses d'incorporation croissantes de poudre de coléoptères n'ont eu aucun effet sur la digestibilité apparente de la matière sèche, des protéines, des lipides, de phosphore et de l'énergie dans les différents régimes expérimentaux.
- Les protéines, le phosphore et la rétention d'énergie ont été renforcés chez les truites nourries avec des aliments comportant de la poudre de coléoptères.

En général, la poudre de coléoptères mise en oeuvre dans cet exemple pourrait remplacer efficacement 100% de la farine de poisson dans le régime alimentaire des truites arc-en-ciel juvéniles avec des effets positifs sur l'IC et la performance globale de la croissance.

## EXEMPLE 5 : Procédés avec ou sans broyage préalable au pressage

### Procédé avec pressage uniquement

200 g de larves de *T. molitor* sont introduits dans un bécher, placé dans un bain-marie à 100 °C et contenant 200 mL d'eau préalablement portée à ébullition. Après 5 minutes, le bécher est retiré du bain-marie, les larves sont essorées, puis passées dans une presse de type bi-vis. Un gâteau de presse est ainsi obtenu.

### Procédé avec un broyage suivi d'un pressage

200 g de larves de *T. molitor* sont introduits dans un bécher, placé dans un bain-marie à 100 °C et contenant 200 mL d'eau préalablement portée à ébullition. Après 5 minutes, le bécher est retiré du bain-marie, les larves sont essorées, puis mixées avec un volume d'eau de 200 mL. Le liquide ainsi obtenu est passé dans une presse de type bi-vis. Un gâteau de presse est ainsi obtenu.

### Mesure du taux de lipides

On place 2 g d'échantillon dans un bécher, on y ajoute 0,2 g de $Na_2SO_4$ et 15 mL de $CHCl_3$/MeOH (2/1 v/v). L'ensemble est placé sous agitation magnétique pendant 20 minutes, ensuite la solution est filtrée, le résidu est placé de nouveau dans le bécher avec 10 mL de $CHCl_3$/MeOH (2/1 v/v). L'ensemble est placé sous agitation magnétique pendant 15 minutes, ensuite la solution est filtrée, les phases solvants sont réunies et évaporées à poids constant. La teneur en lipides est déterminée comme pourcentage de masse après extraction-évaporation par rapport à la masse initiale de l'échantillon (2 g).

### Conclusion

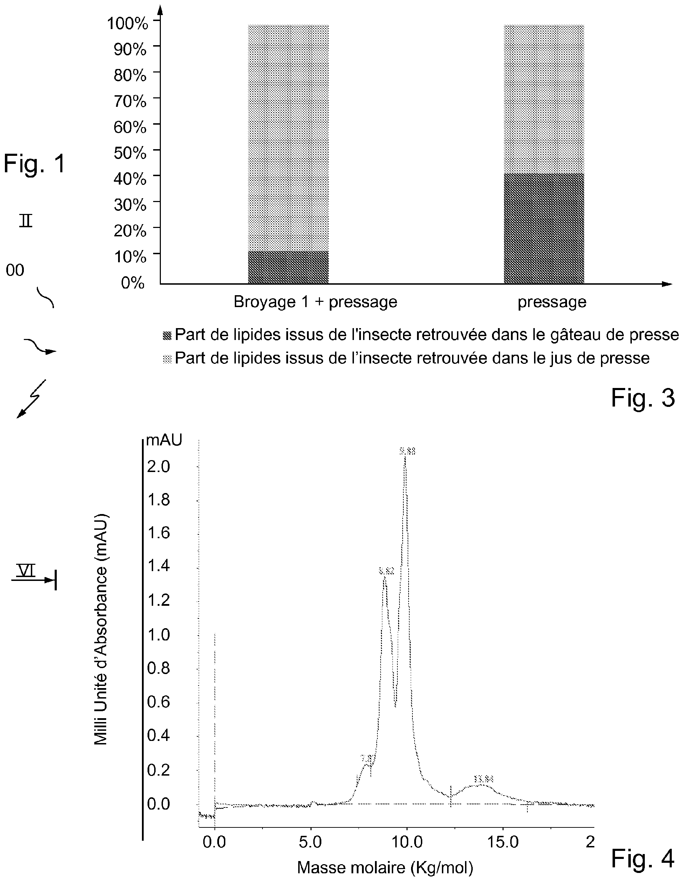

L'importance du broyage en amont du pressage a été étudiée (Figure 3). Il apparait ainsi clairement que la répartition des lipides entre le gâteau et le jus de presse est bien plus efficace, 12,9 *versus* 87,1 contre 42,7 *versus* 57,3, lorsqu'un broyage préalable a été réalisé.

## EXEMPLE 6 : Analyse de la taille des protéines solubles de la poudre de coléoptères selon l'invention.

Un échantillon de 100 mg de la poudre de coléoptère préparée à l'Exemple 1 a été placé dans 10 mL de tampon phosphate NaCl (pH 7,4, 0,137 mM). L'échantillon a été agité durant 1 minute (vortex), puis centrifugé à 900 g durant 1 min. Suite à la centrifugation, l'échantillon a été filtré sur une membrane de 0,45 $\mu$m. L'analyse de la taille des protéines solubles a été réalisée à l'aide d'un système de chromatographie par exclusion stérique, avec une colonne Nucleogel GFC-300. Un tampon phosphate NaCl (pH 7,4, 0,137 mM) a été utilisé comme éluant. Le débit était de 1,0 mL/min. La détection a été réalisée par un détecteur UV à 280 nm.

Les résultats de l'analyse sont présentés dans la Figure 4 et résumés dans le Tableau 13 ci-dessous.

Tableau 13 : Répartition des tailles des protéines solubles contenues dans la poudre de coléoptère préparée à l'Exemple 1

| Taille des protéines (kg/mol) | Abondance relative (%) |
|---|---|
| 6,5 à 12,4 | 74,4 |
| 12,4 à 29 | 20,5 |
| 29 à 66 | 5,1 |

Les résultats montrent qu'environ 74,4 % des protéines solubles présentes dans la poudre de coléoptères selon l'invention ont une masse molaire inférieure à 12400 g/mol (ou Da, Daltons)

**Revendications**

1.   Poudre de coléoptères comportant au moins 67% en poids de protéines et au moins 5% en poids de chitine, les pourcentages en poids étant donnés sur le poids total de poudre de coléoptères.

2.   Poudre de coléoptères selon la revendication 1, comportant des cendres à une teneur inférieure ou égale à 4% en poids sur le poids total de poudre de coléoptères.

3.   Poudre de coléoptères selon la revendication 1 ou 2, comportant de la matière grasse à une teneur comprise entre 5 et 20% en poids sur le poids total de poudre de coléoptères.

4.   Poudre de coléoptères selon l'une quelconque des revendications 1 à 3, dont les protéines présentent une digestibilité supérieure ou égale à 85%.

5.   Poudre de coléoptères selon l'une quelconque des revendications 1 à 4, dont le taux d'humidité résiduel est compris entre 2 et 15%.

6.   Poudre de coléoptères selon l'une quelconque des revendications 1 à 5, comportant entre 40 et 60% en poids de protéines solubles par rapport au poids total de protéines, dans laquelle au moins 50% des protéines solubles ont une taille inférieure ou égale à 12400g/mol.

7.   Procédé de préparation d'une poudre de coléoptères selon l'une quelconque des revendications 1 à 6, comportant les étapes suivantes :

   i) abattage des coléoptères,
   ii) pressage des coléoptères pour obtenir un gâteau de presse, et
   iii) broyage du gâteau de presse.

8.   Procédé selon la revendication 7, comportant en outre une étape de séchage du gâteau de presse.

9.   Procédé selon la revendication 8, comportant les étapes suivantes :

   i) abattage des coléoptères,
   ii) pressage des coléoptères pour obtenir un gâteau de presse,
   iii) séchage du gâteau de presse, et
   iv) broyage du gâteau de presse,

   dans lequel l'étape de pressage est précédée d'une étape de broyage des coléoptères.

10.   Procédé selon la revendication 8, comportant les étapes suivantes :

   i) abattage des coléoptères,
   ii) pressage des coléoptères pour obtenir un gâteau de presse,

iii) séchage du gâteau de presse, et
iv) broyage du gâteau de presse,

dans lequel l'étape de pressage est réalisée à chaud.

11. Procédé selon la revendication 8, comportant les étapes suivantes :

i) abattage des coléoptères,
ii) pressage des coléoptères pour obtenir un gâteau de presse,
iii) séchage du gâteau de presse, et
iv) broyage du gâteau de presse,

dans lequel l'étape de broyage du gâteau de presse est réalisée à une taille de particules comprise entre 300 $\mu$m et 1 mm.

12. Utilisation de la poudre de coléoptères selon l'une quelconque des revendications 1 à 6, dans l'alimentation humaine ou animale.

13. Utilisation selon la revendication 12, dans laquelle la poudre de coléoptère est utilisée en remplacement d'une farine protéique.


**Patentansprüche**

1. Käferpulver, enthaltend mindestens 67 Gew.-% Proteine und mindestens 5 Gew.-% Chitin, wobei die Gewichtsprozente auf das Gesamtgewicht des Käferpulvers bezogen sind.

2. Käferpulver nach Anspruch 1, enthaltend Aschen mit einem Gehalt von unter oder gleich 4 Gew.-%, bezogen auf das Gesamtgewicht des Käferpulvers.

3. Käferpulver nach Anspruch 1 oder 2, enthaltend Fette mit einem Gehalt zwischen 5 und 20 Gew.-%, bezogen auf das Gesamtgewicht des Käferpulvers.

4. Käferpulver nach einem der Ansprüche 1 bis 3, wobei die Proteine eine Verdaulichkeit von über oder gleich 85% aufweisen.

5. Käferpulver nach einem der Ansprüche 1 bis 4, wobei die Restfeuchte zwischen 2 und 15% liegt.

6. Käferpulver nach einem der Ansprüche 1 bis 5, enthaltend zwischen 40 und 60 Gew.-% lösliche Proteine, bezogen auf das Gesamtgewicht der Proteine, wobei mindestens 50 % der löslichen Proteine eine Größe von unter oder gleich 12400 g/mol haben.

7. Verfahren zum Herstellen eines Käferpulvers nach einem der Ansprüche 1 bis 6, umfassend die folgenden Schritte:

i) Töten der Käfer,
ii) Pressen der Käfer, um einen Presskuchen zu erhalten, und
iii) Zerkleinern des Presskuchens.

8. Verfahren nach Anspruch 7, ferner umfassend einen Schritt des Trocknens des Presskuchens.

9. Verfahren nach Anspruch 8, ferner die folgenden Schritte umfassend:

i) Töten der Käfer,
ii) Pressen der Käfer, um einen Presskuchen zu erhalten,
iii) Trocknen des Presskuchens, und
iv) Zerkleinern des Presskuchens,

wobei dem Schritt des Pressens ein Schritt des Zerkleinerns der Käfer vorangeht.

**10.** Verfahren nach Anspruch 8, ferner die folgenden Schritte umfassend:

i) Töten der Käfer,
ii) Pressen der Käfer, um einen Presskuchen zu erhalten,
iii) Trocknen des Presskuchens, und
iv) Zerkleinern des Presskuchens,

wobei der Schritt des Pressens unter Wärme erfolgt.

**11.** Verfahren nach Anspruch 8, ferner die folgenden Schritte umfassend:

i) Töten der Käfer,
ii) Pressen der Käfer, um einen Presskuchen zu erhalten,
iii) Trocknen des Presskuchens, und
iv) Zerkleinern des Presskuchens,

wobei der Schritt des Zerkleinerns des Presskuchens zu einer Teilchengrö-βe zwischen 300 μm und 1 mm erfolgt.

**12.** Verwendung des Käferpulvers nach einem der Ansprüche 1 bis 6 in Lebensmitteln oder Futtermitteln.

**13.** Verwendung nach Anspruch 12, wobei das Käferpulver als Ersatz für proteinhaltiges Mehl verwendet wird.

**Claims**

**1.** Beetle powder having at least 67% by weight of proteins and at least 5% by weight of chitin, the percentages by weight being based on the total weight of the beetle powder.

**2.** Beetle powder according to claim 1, having an ash content that is less than or equal to 4% by weight based on the total weight of the beetle powder.

**3.** Beetle powder according to either claim 1 or claim 2, having a fat content of between 5 and 20% by weight based on the total weight of the beetle powder.

**4.** Beetle powder according to any of claims 1 to 3, wherein the proteins have a digestibility of greater than or equal to 85%.

**5.** Beetle powder according to any of claims 1 to 4, wherein the residual moisture content is between 2 and 15%.

**6.** Beetle powder according to any of claims 1 to 5, having between 40 and 60% by weight of soluble proteins with respect to the total weight of proteins, wherein at least 50% of the soluble proteins are of a size of less than or equal to 12400 g/mol.

**7.** Method for preparing a beetle powder according to any of claims 1 to 6, comprising the following steps:

i) killing the beetles,
ii) pressing the beetles so as to obtain a press cake, and
iii) grinding the press cake.

**8.** Method according to claim 7, further comprising a step of drying the press cake.

**9.** Method according to claim 8, comprising the following steps:

i) killing the beetles,
ii) pressing the beetles so as to obtain a press cake,
iii) drying the press cake, and
iv) grinding the press cake,

wherein the pressing step is preceded by a step of grinding the beetles.

10. Method according to claim 8, comprising the following steps:

   i) killing the beetles,
   ii) pressing the beetles so as to obtain a press cake,
   iii) drying the press cake, and
   iv) grinding the press cake,

   wherein the pressing step is carried out under hot conditions.

11. Method according to claim 8, comprising the following steps:

   i) killing the beetles,
   ii) pressing the beetles so as to obtain a press cake,
   iii) drying the press cake, and
   iv) grinding the press cake,

   wherein the step of grinding the press cake is carried out until a particle size of between 300 $\mu$m and 1 mm is achieved.

12. Use of the beetle powder according to any of claims 1 to 6 in human or animal nutrition.

13. Use according to claim 12, wherein the beetle powder is used instead of a proteinic flour.

Fig. 1

Fig. 1

Fig. 1

Fig. 2A

Fig. 2B

## Fig. 1

II

00

Fig. 3

Broyage 1 + pressage        pressage

▨ Part de lipides issus de l'insecte retrouvée dans le gâteau de presse
▧ Part de lipides issus de l'insecte retrouvée dans le jus de presse

VI →|

Masse molaire (Kg/mol)

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Des insectes dans la farine. *JDD Paris,* 19 Décembre 2012, 1